# EUROPEAN PATENT SPECIFICATION

(11) **EP 1 403 765 B1**
(45) Date of publication and mention of the grant of the patent: **24.12.2008**
(21) Application number: 02021436.7
(22) Date of filing: 25.09.2002
(51) Int. Cl.: G06F 9/46

(54) **Method and computer system for event handling**
Verfahren und Rechnersystem zur Ereignisbehandlung
Méthode et système d'ordinateur pour la gestion d'événements

(43) Date of publication of application: 31.03.2004
(73) Proprietor: SAP AG, 69190 Walldorf (DE)
(72) Inventor: Hammerich, Reiner, 69231 Rauenberg (DE); Chadzelek, Thomas, 66287 Quierschied (DE)
(74) Representative: Rocke, Carsten

(56) References cited:
- EP-A- 0 759 591
- EP-A- 0 798 634
- WO-A-93/00632
- US-A- 5 926 177

## Description

### Field of the Invention

The present invention generally relates to electronic data processing, and more particularly, relates to method, computer program product and system for event handling.

### Background of the Invention

In the generally accepted model view controller (MVC) design pattern used for developing software applications, the model represents the core of such an application. The model can have multiple views, where each view displays information about the model to a user. A controller of the model receives events, for example, from a user through a user interface to manipulate the model. The model and the controller typically include application code. When changes occur in the model, the model updates all of its views. So called data binding is used for decoupling controller and view with regards to data flow. For example, a table view can be defined to display data of a corresponding table that is stored in the model or controller. The table is used as data source for the table view (data binding). For example, the table view can be replaced by a further view, such as a link list, that binds against the same table. In this case the further view displays the table data without changing anything in the controller or the model. When the table view raises an event (e.g., "onClick"), the event is processed by the controller. Typically, the controller includes an event handler that expects a specific signature (e.g., a specific list of parameters), such as "onClick(tableViewCell)". However, when the table view is replaced by the link list view, the signature of the event is likely to change. For example, a different parameter is passed to controller (e.g., "onClick(LinkListItem)"). The controller without further modification is not able to process the event that is raised by the link list view of the event handler. In other words, the prior art MVC design pattern allows one to replace a view without further modification of the controller with respect to data binding but not with respect to event handling.

WO 93/00632 discloses a method and a system for monitoring and changing the operation of a computer system, comprising am event report generator in each executable program whose execution should be monitored; an event processing machine for processing events which are reported by an event report generator depending on a flexible rule base included in the event processing machine. The flexible rule base associates a certain event with a predetermined action, for determining the action associated with the reported event. The system comprises a further equipment controlled by the event processing machine and adapted to perform an action determined by the event processing machine.

US 5 926 177 discloses a Model-View-Controller, wherein a ViewProxy is connected to the controller for receiving view management instructions, and connected to the Model for receiving model change notifications responsive to changes in the appearance of data to be displayed. Multiple Views are connected to the ViewProxy for receiving model change notifications. The ViewProxy determines to which Views the model change notifications are to be sent, and sends model change information to only those Views affected by said model changes. A windowing system displays only active Views, and switches between Views by making at least one View active and selected other Views inactive.

According to the present invention there is provided a computer system, method and computer program product to provide an extended MVC design pattern that overcomes the above indicated problems of prior art MVC design pattern.

A computer system for event handling according to claim 1 includes:
a model, a view and a controller; the view presenting the model and raising a system event; the controller manipulating the model in response to the system event;
characterized in that said computer system further comprises:
a system event handler to perform an analysis if a system event received by the system event handler triggers an application event;
an application event handler to call application code if the application event is triggered, wherein the controller implements the application event handler that corresponds to the action; and wherein
the system event handler, when performing the analysis determines if the system event has a valid representation of an action that corresponds to the application event, said action being defined by the controller, and returns the representation of the action to a framework of the computer system; and
in response to receiving the representation of the action the framework invokes the application event handler.

Further embodiments of the inventions are a method according to claim 10 and a computer program product according to claim 14.

It is an effect of the present invention that the system event is decoupled from the corresponding application event. In other words, the system event handler does not need to implement application logic for event handling but simply invokes the corresponding application event handler. This allows an application developer to replace views in the extended MVC design pattern without modifying the corresponding controller or model.

The aspects of the invention will be realized and attained by means of the elements and combinations particularly pointed out in the appended claims. It is to be understood that both the foregoing general description and the following detailed description are exemplary and explanatory only and are not restrictive of the invention as described.

### Brief Description of the Drawings

- FIG. 1: illustrates a simplified diagram of an extended MVC design pattern according to one embodiment of the present invention;
- FIG. 2: illustrates an example of a visualization of a view that is used in the extended MVC design pattern;
- FIG. 3: illustrates details of a mapping implementation for decoupling system events and application events by using mapping tables for event binding according to one embodiment of the present invention;
- FIG. 4: illustrates a computer program product including a system event handler and an application event handler according to one embodiment of the present invention; and
- FIG. 5: illustrates a method for event handling according to one embodiment of the present invention.

### Detailed Description of the Invention

The same reference numbers are used throughout the drawings to refer to the same or like parts.

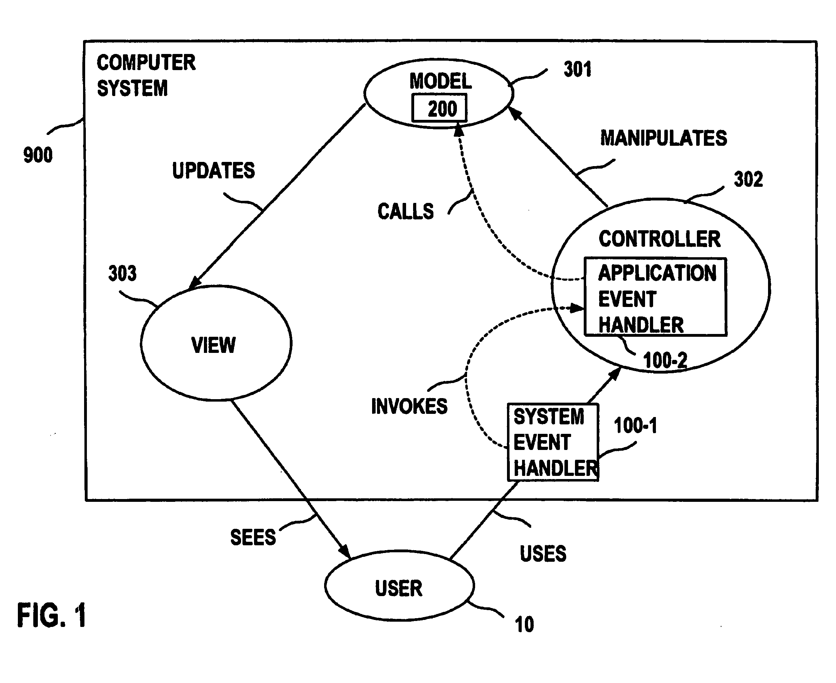

FIG. 1 illustrates a simplified diagram of an extended MVC design pattern according to one embodiment of the present invention.

An illustrative computer system 900 stores a model 301 together with a view 303 of the model 301 and a corresponding controller 302. The model 301 and the controller can include application code 200 that defines an application. The view 303 presents data of the model 301 and/or controller 302 to the user. The model 301 can have multiple views which can be seen by the user as different presentations of the application (model 301/controller 302). When the user interacts with the computer system 900 through a graphical user interface that includes a presentation of the model 301/controller 302, the user 10 uses the controller 302 to manipulate the model 301, which updates its views (e.g., view 303) after having been manipulated. Although the following description refers to an example of a user interacting with a graphical user interface, the spirit of the present invention can also be implemented to enable interaction with other user interfaces, such as voice driven user interfaces. In a voice driven user interface example the view can include UI elements defined by specific sounds or words, which can be useful for users that are blind or have other handicaps.

The computer system 900 has a system event handler 100-1 to receive and process a system event that results, for example, from the user interaction. For example, the system event handler 100-1 can be implemented as a method of a specific controller class. For example, if the user 10 selects a specific user interface (UI) element, such as an OK button, displayed on one of the views of the model 301 and if the selected UI element raises a system event (e.g., "onClick"), the system event handler 100-1 receives the system event. Further examples of UI elements are links, menu items, toolbars or leaves of a tree. Further examples of system events are scroll events or help request events. Not every system event triggers an application event. For example, system events that are raised by scrolling a table can be handled by the system event handler 100-1 without an application.

Once the system event handler 100-1 has received the system event, it analyzes the system event to determine if the system event triggers an application event. Examples of application events are "CheckAvailibility", "CheckValidBusinessPartner" or "SaveOrder". The system event handler 100-1 provides the analysis result to a framework in the computer system 900. In case an application event is triggered by the system event, the framework invokes a corresponding application event handler 100-2 by raising the application event that corresponds to the system event. In one embodiment of the invention, the application event handler 100-2 is a method that is implemented in the controller 302. In other embodiments, the application event handler 100-2 can be located in any controller. The application event handler 100-2 calls the application code 200 that corresponds to the application event and that is implemented by the model 301 (as shown in the example of FIG. 1) or the controller 302.

It is an effect of the present invention that the system event (e.g., "onClick") that is raised by a corresponding UI element is decoupled from the corresponding application event (e.g., "SaveOrder"). In other words, the system event handler 100-1 does not need to implement application logic for event handling but simply invokes the corresponding application event handler 100-2.

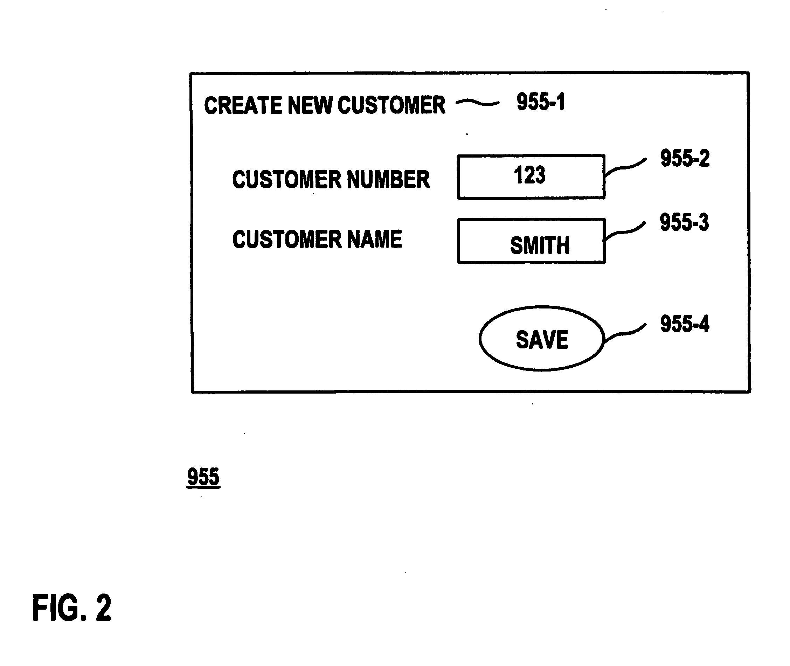

FIG. 2 illustrates an example of a visualization of a view (e.g., view 303) that is used in the extended MVC design pattern.

For example, the view 303 is presented to the user 10 as a graphical user interface (GUI) 955 of an application. The user is a sales person of a specific sales organization SO1. The user 10 uses the GUI 955 to create new customers in a customer relationship management (CRM) system of the sales organization SO1. In the example, GUI 955 includes four UI elements. A title 955-1 (CREATE NEW CUSTOMER) for displaying the title of the application, a first input field 955-2 (CUSTOMER NUMBER) for entering a customer number, a second input field 955-3 (CUSTOMER NAME) for entering a customer name and a SAVE button 955-4 for saving the values of the input fields to the application (e.g., in a corresponding portion of a database). For example, the user has entered CUSTOMER NUMBER "123" and CUSTOMER NAME "SMITH" and sends a corresponding request to the computer system 900 by clicking on the SAVE button. To provide a detailed explanation of the present invention, this example will be referred to in the following description. However, this is not meant to limit the scope of the invention. Any GUI of any complexity can be implemented within the spirit of the present invention.

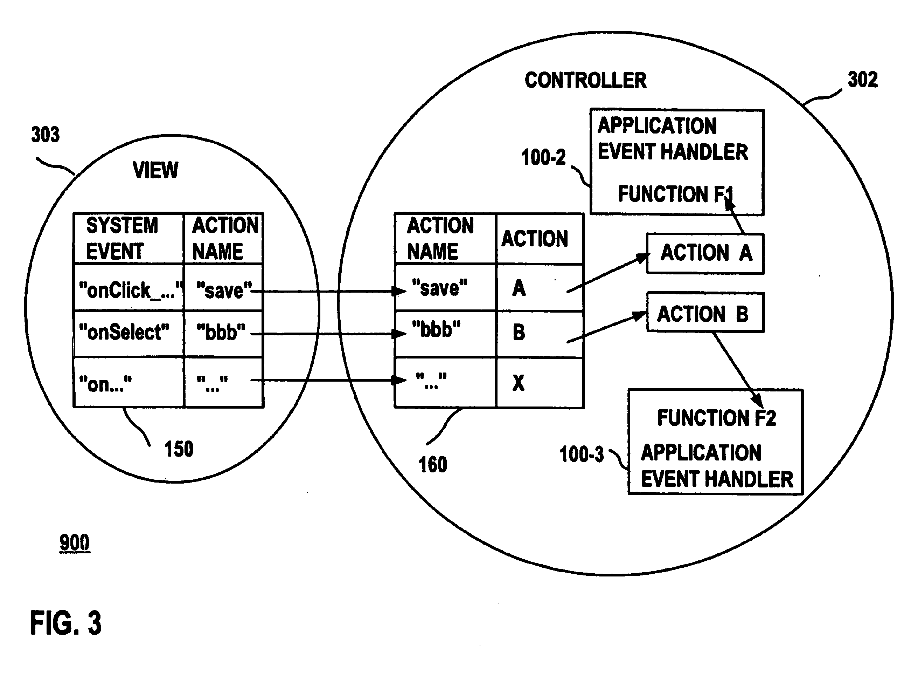

FIG. 3 illustrates details of a mapping implementation for decoupling system events and application events by using mapping tables 150, 160 for event binding according to one embodiment of the present invention. An action (e.g. , ACTION A, ACTION B) is defined by the controller 302. An action relates to an application event. A system event (e.g., "onClick", onSelect") that can be raised by a UI element (e.g., the SAVE button 955-4) of the view 303 is assigned to a corresponding action of the controller if the system event is supposed to trigger a corresponding application event.

In one embodiment of the invention the view 303 has an associated event-action table 150. The event-action table 150 includes a SYSTEM EVENT column to list system events that can be raised by specific UI elements of the view 303, such as the SAVE button (e.g., "onClick_Button_SAVE"). The ACTION NAME column assigns an action name (e.g., "save", "bbb") to each system event that is supposed to trigger an application event. The event-action table 150 can include further columns to reflect the signature (parameters) of an action. For example, action A for saving a new customer can have parameters, such as the customer number, the customer name and the sales organization serving the new customer. The view 303 also defines the mapping of system event parameters to parameters of the corresponding action. Each system event is unique in the event-action table 150 with regards to the view 303.

A row of the event-action table 150 that has an action name assigned to a system event is mapped to a corresponding row in an action table 160 of the controller. Instead of the action table 160, an equivalent data structure, such as a structured document (e.g., an XML document) can be used. The assignments are illustrated by arrows pointing from rows of the event-action table 150 to the action table 160. The ACTION NAME column of the action table 160 includes the action names (e.g., "save", "bbb") of the actions that are defined by the controller 302. In the example, the mapping of the tables 150, 160 is implemented by the action name. Alternatively, other information can be used for the mapping. The mapping can also be defined dynamically through program code that is evaluated at runtime. The ACTION column of the action table 160 includes a reference to an action (e.g., A, B) having attributes, such as "enabled" to indicate if the action is enabled, "text" to define a text of the action to be displayed by the view, and "function" to reference an event handling function (e.g., F1, F2) that is implemented in a corresponding application event handler. The references are illustrated by arrows from the rows of the action table and the corresponding action and further to the event handling functions in the corresponding application event handlers. The action also includes the signature of the corresponding event handling function. For example, the action can be instantiated from a corresponding action class of the controller 302. Each action A, B that is defined in the controller 302 has a corresponding application event handler 100-2, 100-3, respectively, that implements the corresponding event handling function F1, F2.

Binding system events to actions, that is, mapping the view's 303 system events and their parameters to the controller's 302 actions and their signatures, allows one to replace the view 303 by another view of the model without a need to modify the controller 302 and still have a working eventing model. This is achieved by the controller 302 defining the actions that can be used by the views of the model 301 and the view mapping its system events to these actions, thereby automatically using the right signatures of the actions. Too ensure unambiguous mapping rules, the name of an action is unique within the scope of a controller. The mapping functions of the event-action table 150 and the action table 160 can be implemented by alternative means, such as structured documents (e.g., XML documents) or equivalent data structures with appropriate pointers.

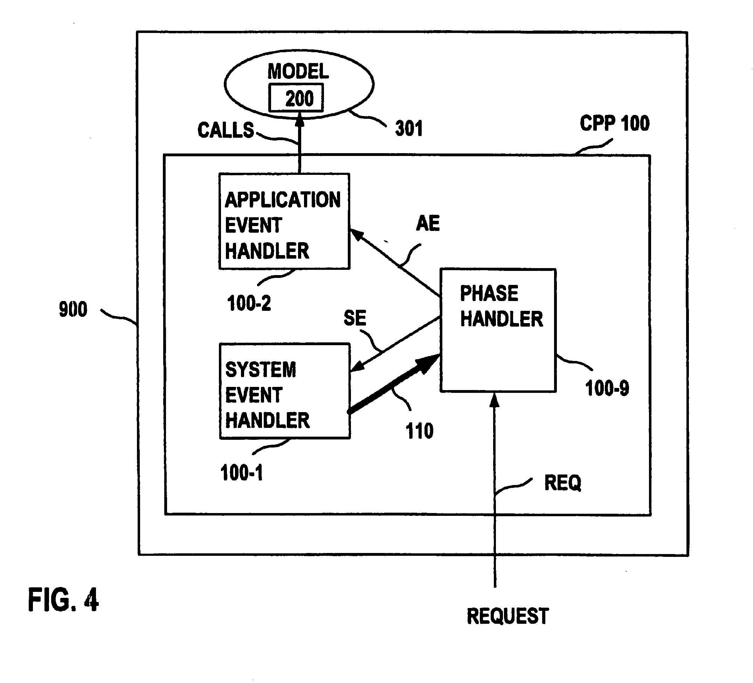

FIG. 4 illustrates a computer program product (CPP) 100 including the system event handler 100-1 and the application event handler 100-2 according to one embodiment of the present invention.

For example, CPP 100 is running on the computer system 900. Computer system 900 has at least one processor and a memory. CPP 100 can be loaded into the memory. CPP 100 includes instructions for the processor. When the processor executes the instructions it causes the computer system 900 to execute steps of a method according to an embodiment of the present invention.

In one embodiment CPP 100 also includes a phase handler 100-9 to chronologically control a plurality of phases of the computer system 900. The plurality of phases includes a request handling phase, a system event handling phase, a data validation and transport phase and an application event handling phase. For example, the phase handler 100-9 can be a part of the framework.

When the user interacts with the computer system and generates a request REQ, for example, by using a client computer that presents the view 303 to the user (e.g., through GUI 955), the phase handler 100-9 receives the request in the request handling phase. The request can also originate from a further computer system that communicates with the computer system over a network, such as a local area network (LAN), a wide area network (WAN) or the Internet. The view 303 can be presented to the user on an output device (e.g., a monitor) of the client computer. The phase handler 100-9 then extracts the system event SE from the request REQ.

The phase handler 100-9 then starts the system event handling phase and sends the system event SE to the system event handler 100-1. The system event handler 100-1 performs an analysis to determine if the system event SE triggers an application event AE. For example, the system event handler 100-1 determines if the system event SE is assigned to a corresponding action and, if so, determines which action (e.g., action A) it is. The system event handler 100-1 can also determine if the action A is enabled (e.g., by verifying a corresponding enabled attribute from the declaration of the action A in the controller 302). The system event handler 100-1 then returns the result 110 of the analysis to the phase handler 100-9. The result 110 includes the representation of the action A. Further, the result can include the value of the enabled attribute. In case the enabled attribute indicates that the action A is disabled, the phase handler 100-9 can respond to the request REQ with a corresponding message. Otherwise, once the phase handler 100-9 receives the valid representation of the action A it starts the data validation and transport phase. During the validation the phase handler can call validation services of the framework to convert non-typed data (e.g., raw string representation of data) of the original request REQ into typed data and to validate the typed data according to predefined validation rules. The predefined validation rules can be stored in a memory portion of the computer system 900, for example, in the form of a data dictionary or a rule data base. During the data transfer, data of the view 303 can be transported to the model 301 or the controller 302 dependent on predefined data binding rules.

If any error occurs during the data validation and transport phase, the phase handler 100-9 can respond to the original request REQ by, for example, posting an error message or providing to the user a possibility to correct a corresponding user input. Referring back to the example of FIG. 2, if the user enters a customer number 999 and the range of customer numbers for the sales organization SO1 is limited from 001 to 300, then a validation service checking the validity of the customer number can generate an error message and the phase handler 100-9 can allow the user to re-enter the customer number in GUI 955.

If the data validation and transport phase is successfully completed, the phase handler 100-9 starts the application event handling phase. For example, the application event AE is constructed from data of:
the system event SE,
the corresponding action with its signature, and
the mapping of system event parameters to action parameters.

The application event AE includes typed data instead of the originally non-typed data of the system event SE and, in general, has a different signature. The application event handler 100-2 is identified through the action A of the application event AE. The application event handler 100-2 then calls (CALLS) application code 200by processing the event handling function F1 (cf. FIG.2) that is implemented in the application event handler 100-2. The application code 200 can be implemented within the model 301 as it is the case in the example of FIG. 4. In another implementation the application code can also be implemented within the controller 302. In this case, the application event handler 100-2 calls the application code of the controller 302 instead of the model 301.

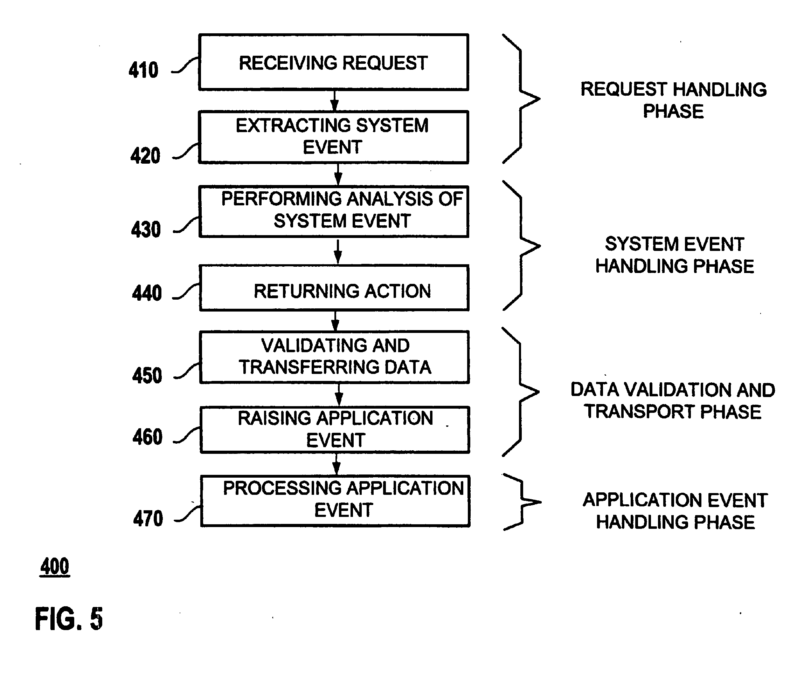

FIG. 5 illustrates a method 400 that can be used with one embodiment of the present invention to implement event handling in the extended MVC design pattern. Some of the pseudo code examples used in the following description use an XML-like notation. However, corresponding code can be implemented in any appropriate programming language, such as Java or C++.

Method 400 includes the steps receiving request 410 and extracting system event 420, which are performed during the request handling phase. It further includes the steps performing analysis of system event 430 and returning action 440, which are performed during the system event handling phase. It further includes the steps validating and transferring data 450 and raising application event 460, which are performed during the data validation and transport phase. It further includes the step processing application event 470, which is performed during the application event handling phase.

In the receiving request step 410, the computer system 900 receives the request REQ that can, for example, result from a user interaction or that can be raised by a further computer system. For example, the phase handler 100-9 is a component of the framework that listens to requests. A typical request includes non-typed data about a system event SE, its parameters and application data.

The following description uses the example of FIG. 2 for further explanation of the invention. If the request REQ results from the user interaction with SAVE mutton 955-4 of the view 303, the request REQ can include the following data in a string format:
"onClick_Button_SAVE", "CUSTOMER NUMBER" = "123", "CUSTOMER NAME" = "SMITH".

In the extracting system event step 420, the phase handler 100-9 extracts the system event "onClick_Button_SAVE" from the request by using conventions defined by a communication protocol, such as the hypertext transfer protocol (HTTP) and sends the system event to the system event handler 100-1.

In the performing analysis of system event step 430, the system event handler 100-1 determines if the system event "onClick_Button_SAVE" has a valid representation of an action. For example, the system event handler 100-1 accesses the event-action table 150 and finds the action name "save" assigned to the system event "onClick_Button_SAVE". Further, it retrieves from the view 303 the information about which parameter of the system event is mapped to a corresponding parameter of the action. Information about the action's signature can be retrieved from the controller 102. The system event handler 100-1 learns from the controller 302 about the signature of action A that belongs to action name "save". For example, action A requires the parameters SALESORG, CUSTNR and CUSTNAME.

Coding section 1 provides a simplified declaration example of action A in the controller 302 with regards to the example of FIG. 2.

```
      Coding section 1:
 <Controller>
    ...
     <Action
            name="save"
            enabled = "true"
            Text = "SAVE"
            Tooltip = "This action saves a new customer">
     <parameters>
       <parameter name="SALESORG" type="ddict.sorg"/>
       <parameter name="CUSTNR" type="ddict.custnr"/>
       <parameter name="CUSTNAME" type="ddict.custna"/>
     </parameters>
     </Action>
     ...
 </Controller>
```

For example, the enabled attribute can be set by an application developer at design time when building the application.

For example, the declaration of an action can also include further attributes, such as sound attributes, that can be used as additional guidance for handicapped users for navigating in the GUI.

Sometimes it is convenient for applications to share standard actions like "save", "mail to" or "print" to reuse the same action definition multiple times. Therefore, standard actions can be created and stored in a public or private repository. Thus, an application programmer can easily reuse an action and bind this action to any UI element in any view. In a controller definition, the usage of a standard action can be expressed, for example, by using a specific repository attribute.

Coding section 2 shows a simplified example of an implementation of the system event handler 100-1.

```
       Coding section 2:
 SystemEventHandler_100-1 (SystemEvent event)
  {
       view = framework.getCurrentView()
       action = view.getAction,(event.name);
       for each parameter in action.parameters
       {
          paramter.value = view.MapEventParam(event);
          action.setParameter(parameter);
       }
       return action;
 }
```

The view 303 can define the parameter mapping in the event-action table 150 or an equivalent mapping data structure. For example, the action parameter CUSTNR is mapped to the view input field CUSTOMER NUMBER and the action parameter CUSTNAME is mapped to the view input field CUSTOMER NAME. The parameter SALES ORGANIZATION can be stored in the view 303 as a constant value SO1 because the view 303 is only for sales people of SO1. In this case the mapping simply assigns the constant value SO1 to the action parameter SALESORG. The system event handler has identified representation (action name "save") of the valid action A for the system event "onClick_Button_SAVE", which is returned to the phase handler to trigger a corresponding application event.

Referring to coding section 2 with regards to the example of FIG.2, event.name equals "onClick_Button_SAVE"; action.parameters is a collection of the parameters of the action A ("save"), named CUSTNR, CUSTNAME, and SALESORG. For each parameter of the action A, the parameter value is mapped by the view 303 to the values entered in the view input fields CUSTOMER NUMBER, CUSTOMER NAME and to the constant value "SO1", respectively.

In one implementation a UI element of a view can be generated at runtime. In this case an action can be dynamically assigned to the UI element. Coding section 3 gives an example of a function OnOutputProcessing that can be used to assign an action "set_options" to a button "OPTIONS" that is generated at runtime.

```
       Coding section 3:
 void OnOutputProcessing()
 {
      Button button = createHutton("OPTIONS");
      Action action = createAction(
                            Name = "setOptions",
                            enabled = true,
                            text = "Set options",
                            EventHandler = somemethod);
      button.setAction(action);
       ...
 }
 ...
 Eventhandler someMethod()
 {
      ... Code for implementation of "Set Options"
            goes here
```

}

Further, the system event handler 100-1 can learn from the controller 302 whether the identified action has an enabled attribute and read the value (e.g., "true" or "false") of this attribute.

In the returning action step 440, the system event handler returns the identified valid action A with its signature and the parameter mapping information to the phase handler 100-9 as part of the result 110 of the analysis. Further, the result 110 can include the value of the enabled attribute of the action A. In one implementation, the start of the data validation and transport phase can further depend on the value of the enabled attribute. If the action A is disabled, the phase handler 100-9 can send a corresponding response to the user. Otherwise, the data validation and transport phase is started.

In the validating and transferring data step 450, the phase handler calls validation services that transform non-typed (string) values of the original request REQ into typed value. For example, "CUSTOMER NUMBER" = "123" is transformed into CUSTNR = 123, wherein CUSTNR has a type integer (3). The validation services can then validate the typed values against predefined validation rules. For example, a validation rule can indicate that users of the sales organization SO1 are only allowed to create customer numbers in the range from 001 to 300. If this condition is not fulfilled, the phase handler can send a corresponding response (e.g., error message) to the user. Once the typed values are validated (e.g., no errors occurred during the validation), the data are transferred from the view 303 to the corresponding data sources (e.g., a database table) of the model 301 or the controller 302.

In the raising application event step 460, the phase handler 100-9 uses the information about the action A, its signature, attributes and the typed values to construct the application event that invokes the application event handler 100-2 that corresponds to the action A. For example, the information (e.g., a method attribute) about action A in the application event has a reference to the corresponding event handling function F1 (e.g., F1 = "save_new_customer").

In the processing application event step 470, the application event handler 100-2 executes the event handling function F1 that is referenced in the application event. The event handling function F1 implements application specific code that, when executed, calls the application code 200 (e.g., of the model 301) in response to the application event.

A simplified implementation example of the application event handler 100-2 with regards to the example of FIG. 2 is described in coding section 4.

```
      Coding section 4:
      void save_new_customer (CUstomNr type CUSTNR,
                 CustomName type CUSTNAME,
                            SalesOrg type SALESORG)
       {
          newCustomer = createInitalCustomer(CustomNr,
                            CustomName,
                            SalesOrg);
         DataBase.OpenConnection();
         DataBase.InsertRecord( newCustomer );
         DataBase.CommitAndClose();
       }
```

The application event handler 100-2 includes application specific coding that would already be included at the system event handler level in prior art systems. In the example of coding section 4, the application specific coding that corresponds to event handling function F1 includes instructions to access an application database (DataBase) and to store a record for the new customer in the application database.

Separating the application event handling level from the system event handling level by using event binding as provided by the above described or equivalent embodiments of the invention allows an application developer or the user 10 to replace views in the extended MVC design pattern without a need for modifying the corresponding controller or model.

## Claims

1. A computer system (900) for event handling comprising:
a model (301), a view (303) and a controller (302); the view (303) presenting the model (301) and raising a system event; the controller (302) manipulating the model (301) in response to the system event;
**characterized in that** said computer system (900) further comprises:
a system event handler (100-1) to perform an analysis if a system event received by the system event handler (100-1) triggers an application event;
an application event handler (100-2) to call application code (200) if the application event is triggered, wherein the controller (302) implements the application event handler (100-2) that corresponds to the action; and
wherein
the system event handler (100-1), when performing the analysis determines if the system event has a valid representation of an action that corresponds to the application event, said action being defined by the controller (302), and returns the representation of the action to a framework of the computer system (900); and
in response to receiving the representation of the action the framework invokes the application event handler (100-2).

2. The computer system (900) of claim 1, where the system event handler (100-1), when performing the analysis, further determines if the action is enabled.

3. The computer system (900) of claim 1 or 2, where the application event handler (100-2) implements an event handling function to call the application code (200).

4. The computer system of claim 1, wherein the framework comprises:
a phase handler (100-9) to control a plurality of phases of the computer system (900), wherein the plurality of phases comprises a request handling phase, a system event handling phase, a data validation and transport phase and an application event handling phase.

5. The computer system of claim 4, where the phase handler (100-9) receives a request in the request handling phase and, after having extracted the system event from the request , starts the system event handling phase.

6. The computer system of claim 5, where the phase handler (100-9) receives the valid representation of the action and starts the data validation and transport phase.

7. The computer system of claim 6, where the phase handler (100-9) calls validation services during the data validation and transport phase to convert non-typed values of the request into typed values and to validate the typed values.

8. The computer system of claim 6, where the phase handler (100-9) starts the application event handling phase after successful completion of the data validation and transport phase by raising the application event that corresponds to the action .

9. The computer system (900) of claim 1, wherein
the vie (303) assigns the system event to the action that is provided by the controller (302); and
the controller (302) calls the application code (200) through an event handling function that is assigned to the action .

10. A method (400) for event handling in a computer system comprising a model (301), a view (303) and a controller.(302); the view (303) presenting the model (301) and raising a system event; the controller (302) manipulating the model (301) in response to the system event;
said method **characterized in that** it comprises the steps:
performing (430) an analysis of a system event by a system event handler (100-1) to determine if the system event triggers an application event;
raising (460) the application event in response to the analysis of the system event; and
processing (470) the application event by an application event handler (100-2) to call application code (200), where the controller (302) implements the application event handler (100-2) that corresponds to the action;
wherein the system event handler (100-1), when performing the analysis, determines if the system event has a valid representation of an action that corresponds to the application event, said action being defined by the controller (302), and returns the representation of the action to a framework in the computer system (900), wherein in response to receiving the representation of the action said framework invoking the application event handler (100-2).

11. The method (400) of claim 10, comprising the further steps:
receiving (410) a request by a phase handler (100-3) comprised in the framework; and
extracting (420) the system event from the request.

12. The method (400) of claim 11, comprising the further step:
returning (440) from the system event handler (100-1) to the phase handler (100-9) the valid representation of an action that is assigned to the system event.

13. The method (400) of claim 11 or 12, wherein the phase handler (100-9) raises (460) the application event if the action is enabled.

14. A computer program product (100) comprising instructions that when loaded into a memory of a computer system (900) cause at least one processor of the computer system (900) to execute the steps of anyone of the claims 10 to 13.

## Patentansprüche

1. Computersystem (900) zur Ereignisabwicklung, umfassend:
ein Modell (301), eine Ansicht (303) und eine Steuerung bzw. Regelung (302),
wobei die Ansicht (303) das Modell (301) präsentiert und ein Systemereignis bewirkt und wobei die Steuerung bzw. Regelung (302) das Modell (301) in Reaktion auf das Systemereignis manipuliert;
**dadurch gekennzeichnet, dass** das Computersystem (900) des Weiteren umfasst:
einen Systemereignisabwickler (100-1) zum Durchführen einer Analyse, wenn ein von dem Systemereignisabwickler (100-1) empfangenes Systemereignis ein Anwendungsereignis auslöst;
einen Anwendungsereignisabwickler (100-2) zum Abrufen eines Anwendungscodes (200), wenn das Anwendungsereignis ausgelöst ist, wobei die Steuerung bzw. Regelung (302) den Anwendungsereignisabwickler (100-2) entsprechend der Handlung implementiert; und
wobei der Systemereignisabwickler (100-1) beim Durchführen der Analyse bestimmt, ob das Systemereignis eine valide bzw. gültige Darstellung einer Handlung entsprechend dem Anwendungsereignis aufweist, wobei die Handlung durch die Steuerung bzw. Regelung (302) festgelegt ist, und die Darstellung der Handlung an ein Framework des Computersystems (900) ausgibt; und in Reaktion auf ein Empfangen der Darstellung der Handlung das Framework den Anwendungsereignisabwickler (100-2) aufruft.

2. Computersystem (900) nach Anspruch 1, wobei der Systemereignisabwickler (100-1) beim Durchführen der Analyse des Weiteren bestimmt, ob die Handlung freigegeben bzw. aktiviert ist.

3. Computersystem (900) nach Anspruch 1 oder 2, wobei der Anwendungsereignisabwickler (100-2) eine Ereignisabwicklungsfunktion zum Abrufen des Anwendungscodes (200) implementiert.

4. Computersystem nach Anspruch 1, wobei das Framework umfasst:
einen Phasenabwickler (100-9) zum Steuern bzw. Regeln einer Mehrzahl von Phasen des Computersystems (900), wobei die Mehrzahl von Phasen eine Anforderungsabwicklungsphase, eine Systemereignisabwicklungsphase, eine Datenvalidierungs- und Transportphase und eine Anwendungsereignisabwicklungsphase umfasst.

5. Computersystem nach Anspruch 4, wobei der Phasenabwickler (100-9) eine Anforderung in der Anforderungsabwicklungsphase empfängt und nach einem Extrahieren des Systemereignisses aus der Anforderung mit der Systemereignisabwicklungsphase beginnt.

6. Computersystem nach Anspruch 5, wobei der Phasenabwickler (100-9) die valide bzw. gültige Darstellung der Handlung empfängt und mit der Datenvalidierungs- und Transportphase beginnt.

7. Computersystem nach Anspruch 6, wobei der Phasenabwickler (100-9) Validierungsdienste während der Datenvalidierungs- und Transportphase abruft, um nichtstandardisierte bzw. nichttypisierte Werte der Anforderung in standardisierte bzw. typisierte Werte umzuwandeln und um die standardisierten bzw. typisierten Werte zu validieren.

8. Computersystem nach Anspruch 6, wobei der Phasenabwickler (100-9) mit der Anwendungsereignisabwicklungsphase nach erfolgreicher Beendigung der Datenvalidierungs- und Transportphase durch Bewirken des Anwendungsereignisses entsprechend der Handlung beginnt.

9. Computersystem (900) nach Anspruch 1, wobei
die Ansicht (303) das Systemereignis derjenigen Handlung zuweist, die von der Steuerung bzw. Regelung (302) bereitgestellt ist; und
die Steuerung bzw. Regelung (302) den Anwendungscode (200) durch eine Ereignisabwicklungsfunktion, die der Handlung zugewiesen ist, abruft.

10. Verfahren (400) zur Ereignisabwicklung in einem Computersystem, umfassend ein Modell (301), eine Ansicht (303) und eine Steuerung bzw. Regelung (302), wobei die Ansicht (303) das Modell (301) präsentiert und ein Systemereignis bewirkt und wobei die Steuerung bzw. Regelung (302) das Modell (301) in Reaktion auf das Systemereignis manipuliert;
wobei das Verfahren **dadurch gekennzeichnet ist, dass** es die nachfolgenden Schritte umfasst:
Durchführen (430) einer Analyse eines Systemereignisses durch einen Systemereignisabwickler (100-1) zum Bestimmen, ob das Systemereignis ein Anwendungsereignis auslöst;
Bewirken (460) des Anwendungsereignisses in Reaktion auf die Analyse des Systemereignisses; und
Verarbeiten (470) des Anwendungsereignisses durch einen Anwendungsereignisabwickler (100-2) zum Abrufen eines Anwendungscodes (200), wobei die Steuerung bzw. Regelung (302) den Anwendungsereignisabwickler (100-2) entsprechend der Handlung implementiert;
wobei der Systemereignisabwickler (100-1) beim Durchführen der Analyse bestimmt, ob das Systemereignis eine valide bzw. gültige Darstellung einer Handlung entsprechend dem Anwendungsereignis aufweist, wobei die Handlung durch die Steuerung bzw. Regelung (302) festgelegt ist, und die Darstellung der Handlung an ein Framework in dem Computersystem (900) ausgibt,
wobei in Reaktion auf ein Empfangen der Darstellung der Handlung das Framework den Anwendungsereignisabwickler (100-2) aufruft.

11. Verfahren (400) nach Anspruch 10, umfassend die weiteren Schritte:
Empfangen (410) einer Anforderung durch einen Phasenabwickler (100-3), der in dem Framework umfasst ist; und
Extrahieren (420) des Systemereignisses aus der Anforderung.

12. Verfahren (400) nach Anspruch 11, umfassend den weiteren Schritt:
von dem Systemereignisabwickler (100-1) an den Phasenabwickler (100-9) erfolgendes Ausgeben (440) der validen bzw. gültigen Darstellung einer Handlung, die dem Systemereignis zugewiesen ist.

13. Verfahren (400) nach Anspruch 11 oder 12, wobei der Phasenabwickler (100-9) das Anwendungsereignis bewirkt (460), wenn die Handlung freigegeben bzw. aktiviert ist.

14. Computerprogrammerzeugnis (100), umfassend Anweisungen, die dann, wenn sie in einen Speicher eines Computersystems (900) geladen sind, wenigstens einen Prozessor des Computersystems (900) zum Ausführen der Schritte nach einem der Ansprüche 10 bis 13 veranlassen.

## Revendications

1. Système d'ordinateur (900) pour le traitement d'événements, comprenant:
un modèle (301), un outil de visualisation (303) et un contrôleur (302); l'outil de visualisation (303) présentant le modèle (301) et intensifiant un événement de système; le contrôleur (302) manipulant le modèle (301) en réponse à l'événement de système;
**caractérisé en ce que** ledit système d'ordinateur (900) comprend en outre:
un programme de traitement des événements de système (100-1) pour accomplir une analyse si un événement de système reçu par le programme de traitement des événements de système (100-1) déclenche un événement d'application;
un programme de traitement des événements d'application (100-2) pour appeler un code d'application (200) si l'événement d'application est déclenché, opération pendant laquelle le contrôleur (302) implémente le programme de traitement des événements d'application (100-2) qui correspond à l'action;
dans lequel
le programme de traitement des événements de système (100-1) détermine, lorsqu'il accomplit l'analyse, si l'événement de système a une représentation valide d'une action qui correspond à l'événement d'application, ladite action étant définie par le contrôleur (302), et renvoie la représentation de l'action vers une structure de cadre du système d'ordinateur (900); et
en réponse à la réception de la représentation de l'action, la structure de cadre consulte le programme de traitement des événements d'application (100-2).

2. Système d'ordinateur (900) selon la revendication 1, dans lequel le programme de traitement des événements de système (100-1) détermine en outre, lorsqu'il accomplit l'analyse, si l'action est permise.

3. Système d'ordinateur (900) selon l'une ou l'autre des revendications 1 et 2, dans lequel le programme de traitement des événements d'application (100-2) implémente une fonction de traitement d'événements pour appeler le code d'application (200).

4. Système d'ordinateur selon la revendication 1, dans lequel la structure de cadre comprend:
un programme de traitement des phases (100-9) pour commander une pluralité de phases du système d'ordinateur (900), dans lequel la pluralité de phases comprend une phase de traitement des requêtes, une phase de traitement des événements de système, une phase de validation et de transport des données et une phase de traitement des événements d'application.

5. Système d'ordinateur selon la revendication 4, dans lequel le programme de traitement des phases (100-9) reçoit une requête dans la phase de traitement des requêtes et démarre la phase de traitement des événements de système après avoir extrait l'événement de système à partir de la requête,

6. Système d'ordinateur selon la revendication 5, dans lequel le programme de traitement des phases (100-9) reçoit la représentation valide de l'action et démarre la phase de validation et de transport des données.

7. Système d'ordinateur selon la revendication 6, dans lequel le programme de traitement des phases (100-9) appelle les utilitaires de validation pendant la phase de validation et de transport des données afin de convertir des valeurs non typées de la requête en valeurs typées et de valider les valeurs typées.

8. Système d'ordinateur selon la revendication 6, dans lequel le programme de traitement des phases (100-9) démarre la phase de traitement des événements d'application après l'achèvement correct de la phase de validation et de transport des données en intensifiant l'événement d'application qui correspond à l'action.

9. Système d'ordinateur (900) selon la revendication 1, dans lequel
l'outil de visualisation (303) attribue l'événement de système à l'action qui est fournie par le contrôleur (302); et
le contrôleur (302) appelle le code d'application (200) par l'intermédiaire d'une fonction de traitement des événements qui est attribuée à l'action.

10. Procédé (400) pour le traitement d'événements dans un système d'ordinateur comprenant un modèle (301), un outil de visualisation (303) et un contrôleur (302); l'outil de visualisation (303) présentant le modèle (301) et intensifiant un événement de système; le contrôleur (302) manipulant le modèle (301) en réponse à l'événement de système;
ledit procédé étant **caractérisé en ce qu'**il comprend les étapes suivantes:
l'accomplissement (430) d'une analyse d'un événement de système par un programme de traitement des événements de système (100-1) afin de déterminer si l'événement de système déclenche un événement d'application;
l'intensification (460) de l'événement d'application en réponse à l'analyse de l'événement de système; et
le traitement (470) de l'événement d'application par un programme de traitement des événements d'application (100-2) pour appeler le code d'application (200), opération pendant laquelle le contrôleur (302) implémente programme de traitement des événements d'application (100-2) qui correspond à l'action;
dans lequel le programme de traitement des événements de système (100-1) détermine, lorsqu'il accomplit l'analyse, si l'événement de système a une représentation valide d'une action qui correspond à l'événement d'application, ladite action étant définie par le contrôleur (302), et renvoie la représentation de l'action vers une structure de cadre dans le système d'ordinateur (900), et dans lequel, en réponse à la réception de la représentation de l'action, ladite structure de cadre consulte le programme de traitement des événements d'application (100-2).

11. Procédé (400) selon la revendication 10, comprenant les étapes supplémentaires suivantes:
la réception (410) d'une requête par un programme de traitement des phases (100-3) compris dans la structure de cadre; et
l'extraction (420) de l'événement de système à partir de la requête.

12. Procédé (400) selon la revendication 11, comprenant l'étape supplémentaire suivante:
le renvoi (440) de la représentation valide d'une action qui est attribuée à l'événement de système vers le programme de traitement des phases (100-9) à partir du programme de traitement des événements de système (100-1).

13. Procédé (400) selon l'une ou l'autre des revendications 11 et 12, dans lequel le programme de traitement des phases (100-9) intensifie (460) l'événement d'application si l'action est permise.

14. Produit de programme d'ordinateur (100) comprenant des instructions qui, lorsqu'elles sont chargées dans une mémoire d'un système d'ordinateur (900), provoquent qu'au moins un processeur du système d'ordinateur (900) exécute les étapes selon l'une quelconque des revendications 10 à 13.
